Europäisches Patentamt

European Patent Office

Office européen des brevets

(11) Publication number: **0 486 688 A1**

# EUROPEAN PATENT APPLICATION
## published in accordance with Art. 158(3) EPC

(21) Application number: 90907425.4

(22) Date of filing: **11.05.90**

(86) International application number: **PCT/JP90/00600**

(87) International publication number: **WO 91/18021 (28.11.91 91/27)**

(51) Int. Cl.5: **C08B 37/08**

(43) Date of publication of application: **27.05.92 Bulletin 92/22**

(84) Designated Contracting States: **CH DE FR GB IT LI NL**

(71) Applicant: **NIPPON SODA CO., LTD.**
**2-1, Ohtemachi 2-chome**
**Chiyoda-ku, Tokyo 100(JP)**

(72) Inventor: **TOKURA, Seiichi**
**1-13, Hakken 5-zyou Nishi, 4-chome, Nishi-ku**
**Sapporo-shi, Hokkaidou 063(JP)**
Inventor: **TAKANO, Izumi, Nihongi Plant,**

Nippon Soda Co, Ltd.
950, Ohaza Huzisawa, Nakagou-mura
Nakakubiki-gun, Niigata 949-23(JP)
Inventor: **KIZAWA, Hidenori,c/o Nippon Soda**
**Co., Ltd.**
**2-1 Ohtemachi 2-chome, Chiyoda-ku**
**Tokyo 100(JP)**

(74) Representative: **de Bruijn, Leendert C.**
**Nederlandsch Octrooibureau**
**Scheveningseweg 82 P.O. Box 29720**
**NL-2502 LS 's-Gravenhage(NL)**

(54) **NEW LYSOZYME-DIGESTIVE CHITIN DERIVATIVE.**

(57) Chitin and chitosan derivatives prepared by acetylating, respectively, chitin and chitosan derivatives each soluble in water and organic solvents. Since they not only are soluble in water and organic solvents but also can digest lysozyme, the development of their uses can be expected in a wide range involving pharmaceuticals, agricultural chemicals and medical materials.

FIG. 2

Technical Field:

This invention is concerning to New Derivatives of Chitin and Chitosan those are digestible by lysozyme and is appointed to develope usefulness in the wide range involving pharmaceuticals, agricultural chemicals and medical materials.

Back Ground Art:

Chitin and chitosan are polysaccharides which are constructive element in the exoskeletons of crustacea such as crab and shrimp, mollusks such as euphausia and cuttlefish and shellfishes, and are said globally abundant biological resources next to cellulose, and are a few basic biomass left in this century.

Chitin is a biopolymer of over 1,000,000 of molecular weight combining 5000 or more monomers of N-acetyl-$\beta$-glucosamine in each other at $\beta$-(1-4) positions. Although it behaves as digestible itself very slowly in biological systems, it is very difficult to formulate, handle and to additionally treat because of its rigid crystal array and its insolubility.

On the other hand, chitosan is basic biopolymer estimated as 200,000-400,000 of molecular weight, polysaccharide containing free amino group, a hydrolyzed product of chitin with hot alkaline solution and forms soluble salts with organic acids which remarkably reduce the digestivity in biological systems.

In order to extend the merits, to supplement demerits of chitin and chitosan and to develop wider usefulness, it has been proposed to synthesize hydroxyalkyl chitosan derivatives which are etherified by alkylene oxides of chitin and chitosan and to get the derivatives of soluble chitin and chitosan in water and alcohols.

Investigating more details on the derivatives of hydroxyl alkyl chitosan, the inventors found that they were not digested by lysozyme.

Lysozyme is a kind of mucopolysaccharidases, occurred in tissues and body fluids (for example, blood, lacrima and saliva) of mammalian animals including human beings, birds (for example, albumen in eggs) and higher plants. The digestivity by Lysozyme is one of the useful methods to express the digestivity in biological systems of a certain substance. Therefore, the digestivity in biological systems can be controlled by selection of various derivatives of chitosan possessing the different digstivities by lysozyme.

Disclosure of the Invention:

The inventors hardly studied substances excellently digestible by lysozyme which can be expected to use in a wide range involving pharmacenuticals, agricultural chemicals and medical materials, then they found that the substances which was obtained by acetylation of derivatives of hydroxyalkyl chitosan described above behaved as excellently digestible substances by Lysozyme, and completed the invention aimed.

These inventions are those:

(1) The derivatives of chitin and chitosan digestible by lysozyme, prepared by acetylation of the derivatives of chitin and chitosan which are soluble in water and organic solvents.

(2) The derivatives of chitin and chitosan according to (1) wherein the derivatives of chitin and chitosan which are soluble in water and organic solvents are the derivatives of hydroxylalkyl chitosan obtained by etherification of chitin and chitosan by alkylene oxide.

(3) The derivatives of chitin and chitosan according to (1) or (2) wherein the derivatives of chitin and chitosan which are soluble in water and organic solvents are the derivatives of hydroxylalkyl chitosan of which molar subsition of alkylen oxide is one or more.

(4) The derivatives of chitin and chitosan according to (1), (2) or (3) wherein the degree of acetylation of amino group is 5-50 %.

(5) The derivatives of chitin and chitosan according to (1), (2), (3) or (4) wherein content of primary amino group is 2 % or less.

Best Made for Carrying out the invention:

As chitin and chitosan for the starting materials in these invention, usually commercially available ones, partially deacetylated acetyl chitin etc. are applicable.

However, highly pure chitin which contents little free amino group is undesirable because its reactivity with alkylene oxides is poor. On the other hand, chitosan which contents excess free amino group is also undesirable, because alkylene oxide reacts with it and leaves a little free amino group at which acetylation is supposed to be occurred.

In the derivatives of hydroxyalkyl chitosan, hydroxybutyl chitosan is insoluble in water and hydroxyethyl chitosan is insoluble in organic solvents such as alcohols.

In this invention the representative examples of the available derivatives of hydroxyalkyl chitosan which are soluble in water and organic solvents, are hydroxypropyl chitosan (briefly expressed as HPCH, hereafter), hydroxyethyl hydroxypropyl chitosan and hydroxypropyl hydroxybutyl chitosan etc. It is especially desirable that HPCH of which molar substitution of alkylene oxide is 2 or more in these.

If the degree of acetylation of amino group is less than 5 % or their ratio of unreacted free primary amino group is more than 2 %, the acetylated products of the derivatives of chitosan which are soluble in water and organic solvents, described above, are hardly digestible by lysozyme, and if the degree of acetylation of amino group is more than 50 %, they are little soluble in water.

For example, the invention on HPCH is explained as follows:

The derivatives of acetylated chitin and chitosan (briefly expressed hereafter as AC-HPCH) in the invention are easily obtained by usual process of acetylation, i.e. by treatment of HPCH with acetic anhydride in solvents such as water or alcohols.

AC-HPCH of which molar substitution of propylene oxide is 2 or more, is desirable because it is soluble in water and alcohols and is well digestible by lysozyme.

More details of the invention is described by accompanying some examples below. However, the range of this invention is not limited by the following examples.

Example 1

(1) Preparation of HPCH

In 47 % aqueous solution of sodium hydroxide, 220 g of the source chitin (supplied by Katakura Chikkarin Co., Ltd.) was treated at 60°C for 1 hour, then the alkaline aqueous mixture was filtered, washed by methanol and followed by water. The filtered substance was treated in diluted hydrochloric acid at 40°C for 1 hour, washed by water, then 184 g of partially deacetylated chitin (Table 1-1-1) was obtained by drying it under reduced pressure. To 110 g of this partially deacetylated chitin, 500 g of toluene and 21.2% aqueous solution (so as NaOH/chitin = 0.1 W/W and water/chitin = 0.37 W/W) was added, mercerized under atmosphere of nitrogen gas at room temperature, added 324 g of propylene oxide ( molar ratio was 10 to chitin), and etherified at 85-88°C. After terminating the reaction, solvents were removed off by evaporation, the PO-adduct (partially N-acetylated HPCH) was obtained. This PO-adduct was treated with 47 % sodium hydroxide aqueous solution at 130°C for 6 hours, repeatedly washed by hot water to remove excess of alkali. Thus, 130 g of HPCH (Table-2-(1)) was obtained by drying it under reduced pressure.

(2) Preparation of AC-HPCH

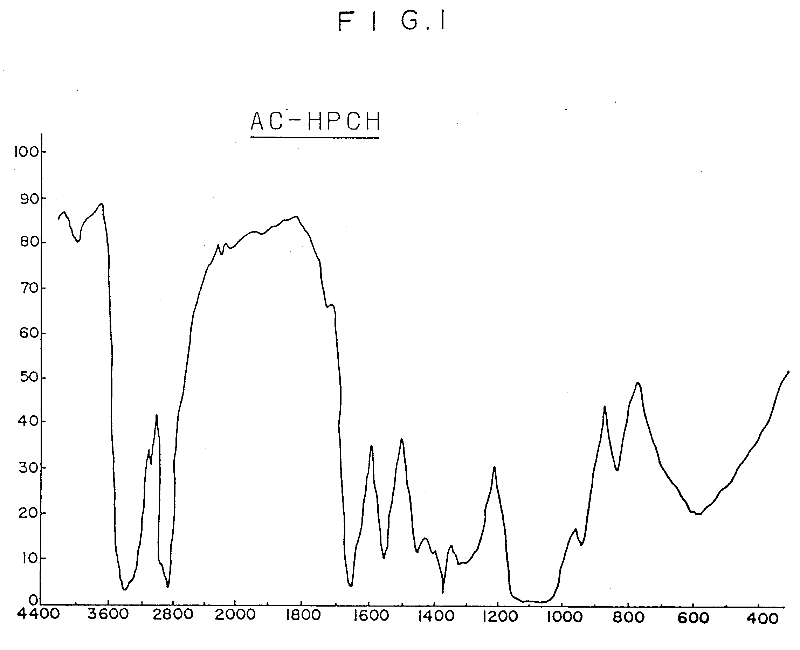

In 150 ml of deionized water 10 g of the HPCH described above was dissolved and 100 ml of methanol was added in the solution, then in which was added 25 ml of acetic anhydride with vigorously stirring, and stirred overnight at the room temperature. After the reaction mixture was dialyzed in deionized water, AC-HPCH was obtained by lyophilyzing the solution. Air dried film (transparent) on glass plate by casting 1 % (W/V) of the obtained AC-HPCH aqueous solution was confirmed to be sufficiently acetylated by IR spectrogram. (Fig. 1)

(3) Confirmation of the digestivity by lysozyme

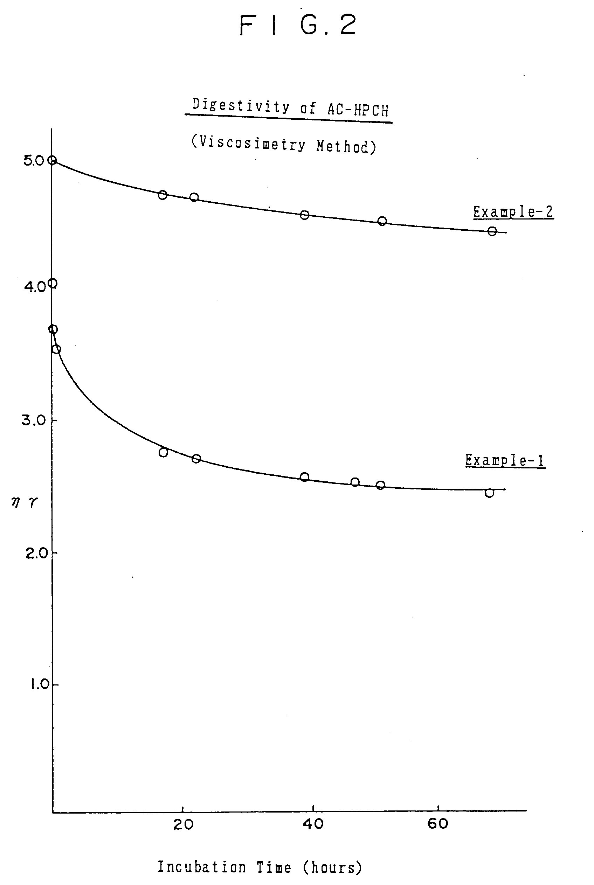

To 5 ml of 0.1 % (W/V) AC-HPCH aqueous solution, 1 ml of 954 $\mu$g/ml lysozyme (prepared from albumen of hen's egg, recrystallized 6 times, supplied by SeiKagaku Kogyo Co., Ltd.) aqueous solution was added. The changes of viscosity were traced by using viscosimeter (Ubbelohde type, flowing down time of deionized water was 179.5 seconds) under following conditions. It was confirmed that the digestivity of AC-HPCH by lysozyme was very excellent Fig. 2).

EP 0 486 688 A1

| Test Conditions | |
|---|---|
| pH | about neutral |
| Temperature | 37 °C |
| [ E ] | $1.8 \times 10^{-2}$ mg/ml (954 $\mu$g/ml) |
| $t_0$ | 179.5 seconds |
| [ nr = $t/t_0$ ] | |

The obtained AC-HPCH as above described is solible in both water and alcohols, and the digestivity by lysozyme is excellent.

Example 2

(1) preparation of HPCH

To 100 g of the source chitosan (Table 1-(2)) (supplied by Kyouwa Fat and Oil Co., Ltd.) 500 g of toluene and 21.2% aqueous solution (so as NaOH/chitin = 0.1 (W/W) and water/chitin = 0.37 (W/W)) was added, marcerized under atmosphere of nitrogen gas at room temperature for 1 hour, added 324 g of propylene oxide (molar ratio was 10 to chitin) , etherified at 85-88 °C. Terminating the reaction, solvents were removed off by evaporation. The adduct was washed several times by hot water. The refined 210 g HPCH (Table -2-(2)) was obtained by drying it under reduced pressure.

(2) preparation of AC-HPCH

The preparation was carried out under the same conditions as shown in Example 1-(2). Sufficient acetylation was confirmed by IR spectrometry.

(3) The confirmation of digestivity by lyzozyme

The digestivity was tested under the same condition as shown in Example 1-(3). Some digestivity was observed (Fig. 2)

(Table-1)

| | Moisture (%) | *1 Total Nitrogen (%) | *2 Viscosity (20 °C) (cst) | *3 Contents of Amino group(%) | Degree of deacetylation (%) |
|---|---|---|---|---|---|
| Example 1 (1) | 4.0 | 6.9 | 327 | 4.21 | 47.7 |
| Example 2 (2) | 8.2 | 7.9 | 17 | 8.80 | — |

*1 according to Semimicro-Kijheldahl Method
*2 measured in 0.5% in 0.5% aquaous solutin of acetic acid
*3 determined by colloidal titration based on PVS-K solution

4

(Table-2)

| | Loss by dryness (%) | *4 Viscosity (CST) | *5 M.S | Total Nitrogen (%) | *6 Content of Amino Group(%) | *7 Solubilities | |
|---|---|---|---|---|---|---|---|
| | | | | | | Water | Alcohol |
| Example 1 (1) | 2.1 | 24.9 | 3.4 | 3.51 | 41.6 | well | well |
| Example 2 (2) | 2.0 | 21.4 | 4.2 | 3.31 | 15.6 | well | well |

*4 in 2 % aquaous solution at 20℃

*5 M.S :molar substitution of PO group, MS was calculated from total nitrogen content of the source (Na) and that of PO adduct (Nb) by following equation

$$MS = \frac{14 \times (Na - Nb)}{58 \times Na - Nb}$$ (58: molecular weight of PO)

*6 The ratio of contents of primary amine determined by Van Slyke Method and total nitrogen

*7 At the concentration of 2 %

Industril Applicability:

As the evidence of examples described above, the digestivity by lysozyme can be controlled by controlling the content of aminio group in HPCH. This invention is appointed to develop usefulness in a wide range involving pharmaceuticals, agricultural chemicals and medical materials.

Brief Description of Drawings:

Fig.1 is Infra-Red Absorption Spectrogram of AC-HPCH.
Fig. 2 is the graph on digestivity of AC-HPCH by lysozyme.

**Claims**

1. The derivatives of chitin and chitosan digestible by lysozyme, prepared by acetylation of the derivatives of chitin and chitosan which are soluble in water and organic solvents.

2. The derivatives of chitin and chitosan according to claim (1) wherein the derivatives of chitin and chitosan which are soluble in water and organic solvents are the derivatives of hydroxylalkyl chitosan obtained by etherification of chitin and chitosan by alkylene oxide.

3. The derivatives of chitin and chitosan according to claim (1) or (2) wherein the derivatives of chitin and chitosan which are soluble in water and organic solvents are the derivatives of hydroxylalkyl chitosan of which molar subsition of alkylen oxide is one or more.

4. The derivatives of chitin and chitosan according to claim (1), (2) or (3) wherein the degree of acetylation of amino group in acetylation is 5-50 %.

5. The derivatives of chitin and chitosan according to claim (1), (2), (3) or (4), wherein content of primary amino group of the derivatives of chitin and chitosan digestible by lysozyme is 2 % or less.

# F I G.I

## AC-HPCH

EP 0 486 688 A1

# F I G. 2

Digestivity of AC-HPCH

(Viscosimetry Method)

# INTERNATIONAL SEARCH REPORT

International Application No PCT/JP90/00600

**I. CLASSIFICATION OF SUBJECT MATTER** (if several classification symbols apply, indicate all) [6]

According to International Patent Classification (IPC) or to both National Classification and IPC

Int. Cl$^5$      C08B37/08

**II. FIELDS SEARCHED**

| Minimum Documentation Searched [7] | |
|---|---|
| Classification System | Classification Symbols |
| IPC | C08B37/08 |

Documentation Searched other than Minimum Documentation
to the Extent that such Documents are Included in the Fields Searched [8]

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| A | JP, A, 56-43301 (Kureha Chemical Industry Co., Ltd.), 22 April 1981 (22. 04. 81), (Family: none) | 1 - 5 |
| A | JP, A, 57-180602 (Nippon Soda Co., Ltd.), 6 November 1982 (06. 11. 82), (Family: none) | 1 - 5 |
| A | JP, A, 62-4702 (Lion Corp.), 10 January 1987 (10. 01. 87), (Family: none) | 1 - 5 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| July 4, 1990 (04. 07. 90) | July 16, 1990 (16. 07. 90) |
| International Searching Authority | Signature of Authorized Officer |
| Japanese Patent Office | |

Form PCT/ISA/210 (second sheet) (January 1985)